# EUROPÄISCHE PATENTSCHRIFT

(11) **EP 0 965 035 B1**
(45) Veröffentlichungstag und Bekanntmachung des Hinweises auf die Patenterteilung: **24.07.2002**
(21) Anmeldenummer: 98906737.6
(22) Anmeldetag: 03.03.1998
(51) Int. Cl.: G01N 21/73

(54) **VORRICHTUNG ZUM ANALYSIEREN GASFÖRMIGER PROBEN**
DEVICE FOR ANALYSING GASEOUS SAMPLES
DISPOSITIF POUR ANALYSER DES ECHANTILLONS GAZEUX

(30) Priorität: 04.03.1997 AT 36797
(43) Veröffentlichungstag der Anmeldung: 22.12.1999
(73) Patentinhaber: Platzer, Bernhard, 8010 Graz (AT)
(72) Erfinder: PLATZER, Bernhard, A-8010 Graz (AT); KNAPP, Günter, A-8047 Graz (AT)
(74) Vertreter: Cunow, Gerda
(86) Internationale Anmeldenummer: AT9800047
(87) Internationale Veröffentlichungsnummer: WO9839637

(56) Entgegenhaltungen:
- DE-A- 3 942 375
- US-A- 3 508 106
- US-A- 3 685 911
- HARA L AND PARSONS M: "ROTATING ARC DIRECT CURRENT PLASMA AS AN EMISSION EXCITATION SOURCE" ANALYTICAL CHEMISTRY, Bd. 57, Nr. 4, April 1985, Seiten 841-845, XP002066404
- SLINKMAN D ET AL: "MAGNETRON ROTATING DIRECT CURRENT ARC USING GRAPHITE FURNACE SAMPLE INTRODUCTION FOR MICROSOLUTION ANALYSIS" ANALYTICAL CHEMISTRY, Bd. 62, Nr. 15, 1.August 1990, Seiten 1656-1661, XP000161979
- ANALYTICAL SPECTROSCOPY SERIES, EDITED BY E L GROVE, Bd. 1, Teil II: "ANALYTICAL EMISSION SPECTROSCOPY", MACEL DEKKER INC, NEW YORK, 1972, Seiten 191-213 und 246-251 XP002066405

## Beschreibung

Die vorliegende Erfindung bezieht sich auf eine Vorrichtung zum Analysieren gasförmiger Proben, umfassend eine Einrichtung zur Erzeugung eines Plasmas, eine Zuführeinrichtung für die zu analysierende Probe und wenigstens eine Detektoreinheit, welche insbesondere wenigstens ein Interferenzfilter, eine Linsenanordnung und einen Photodetektor zur Erfassung einer von der zu analysierenden Probe emittierten Strahlung, insbesondere Atomemission oder Molekülemission, aufweist.

Eine Vorrichtung zum Analysieren gasförmiger Proben dieser Art ist beispielsweise aus der US-PS 5 009 099 bekannt geworden, wobei ein Plasmagenerator, welchem unter anderem die zu analysierende Probe zuführbar ist, eine Detektoreinheit bestehend aus einer Vielzahl von Photodetektoren nachgeschaltet ist, wobei bei dieser bekannten Einrichtung insbesondere auf eine Untergrundkorrektur in einem Plasmagas-Chromatographiedetektor abgezielt wird.

Eine weitere Vorrichtung zum Analysieren gasförmiger Proben ist aus: Analytical Spectroscopy Series, Ed: E.L. Grove, Bd.1, Teil II, "Analytical Emission Spectroscopy", Macel Deker Inc., New York, 1972, seiten 191-219 und 246-251 bekannt.

Eine Detektoreinheit zur Verwendung in einer Vorrichtung der eingangs genannten Art zur Erfassung einer von einer zu analysierenden Probe emittierten Strahlung ist für sich gesehen beispielsweise aus der DE-OS 39 42 375 bekannt geworden, wobei mit dieser bekannten Vorrichtung auf die gleichzeitige Erfassung mehrerer Wellenlängenbereiche einer polychromatischen Lichtstrahlung mit einem Detektor für jeden erfaßten Wellenlängenbereich abgezielt wird. Bei dieser bekannten Ausbildung ist der Detektor bzw. jede Detektoreinheit von einem Interferenzfilter, einer Linsenanordnung und einem nachgeschalteten Photodetektor mit einer entsprechenden Auswerteelektronik gebildet.

Ein abgewandelter Meßfühler für ein tragbares Analysegerät ist beispielsweise der DE-A 38 40 106 zu entnehmen, wobei eine Mehrzahl von Umlenkspiegeln verwendet wird.

Zur Erzeugung eines Plasmas für unterschiedliche Einsatzzwecke wird darüberhinaus beispielsweise auf die US-PS 4 654 504, die US-PS 5 394 090, die US-PS 5 394 091, die US-PS 5 394 092 oder die US-PS 5 153 519 verwiesen, wobei in diesen bekannten Ausbildungen unterschiedliche Konstruktionen von Mikrowellen- oder RF-Plasmageneratoren vorgesehen sind, um ein Plasma für unterschiedliche Einsatzbereiche bzw. Analysevorgänge zur Verfügung zu stellen. Problematisch bei diesen bekannten Vorrichtungen ist die Einkopplung der elektromagnetischen Energie in das Plasmagas, wobei die aufgewendete Leistung üblicherweise bei einigen hundert Watt liegt. Es ist somit die einzukoppelnde Leistung sehr hoch, sodaß für eine entsprechende Wärmeabfuhr in unmittelbarer Nachbarschaft des erzeugten Plasmas Sorge getragen werden muß, um eine Beschädigung von Teilen der Apparatur zu vermeiden. So müssen nicht nur Teile der Apparatur aus einem elektrisch nicht-leitenden, hochtemperatur-beständigen Material ausgebildet sein, um das Gas bzw. Plasma von den übrigen Teilen der Apparatur zu trennen, sondern es ergibt sich zumeist auch ein überaus großer Platzbedarf für entsprechende Kühlvorrichtungen, welche üblicherweise die Erzeugung eines Plasmas relativ geringer Ausdehnung erschweren bzw. unmöglich machen.

Im Zusammenhang mit der Herstellung des Plasmas und insbesondere der Verwendung von Zumischgasen sowie des jeweils verwendeten Plasmagases kann darüberhinaus auf die US-PS 4 776 690, die US-PS 5 151 371, die US-PS 3 887 280 oder die US-PS 4 517 824 verwiesen werden, woraus die Verwendung unterschiedlicher Zumischgase zu Plasmagasen im Zusammenhang mit speziellen Einsatzbereichen der Analyse von gasförmigen Proben entnehmbar ist.

Betreffend die Auswahl der Plasmagase ist es beispielsweise aus der DE-A 41 10 343 oder der US-A 5 397 092 bekanntgeworden, ein Edelgas, insbesondere Helium oder Argon, zu verwenden.

Ausgehend von einer Vorrichtung der eingangs genannten Art und unter Berücksichtigung der Nachteile bekannter Verfahren und Konstruktionen setzt sich die vorliegende Erfindung zum Ziel, eine Vorrichtung zum Analysieren gasförmiger Proben zu schaffen, mit welcher es mit einer einfachen und kleinbauenden Konstruktion gelingt, bei niedriger Plasmaleistung und einem kleinem Detektorvolumen, wodurch der Einsatz der erfindungsgemäßen Vorrichtung in mobilen bzw. tragbaren Geräten begünstigt wird, eine entsprechend hohe Genauigkeit und Zuverlässigkeit der Ergebnisse der zu analysierenden Proben zu ermöglichen. Zur Lösung dieser Aufgabe ist die erfindungsgemäße Vorrichtung im wesentlichen dadurch gekennzeichnet, daß die Einrichtung zur Erzeugung des Plasmas von zwei in Abstand parallel voneinander angeordneten, insbesondere ring- bzw. scheibenförmigen, Elektroden mit jeweils einer im wesentlichen zentrischen, insbesondere kreisförmigen, Durchtrittsöffnung und einem zwischen den Elektroden angeordneten Isolator mit insbesondere kreisförmiger Durchtrittsöffnung zur Begrenzung des Plasmas gebildet ist und daß zwischen der Einrichtung zur Erzeugung des Plasmas und der Detektoreinheit eine optische Einheit, insbesondere eine Kollimatorlinse, zur Erzeugung eines Parallelstrahlbündels vorgesehen ist. Dadurch, daß erfindungsgemäß die Einrichtung zur Erzeugung des Plasmas von zwei in Abstand parallel voneinander angeordneten, insbesondere ring- bzw. scheibenförmigen, Elektroden und einem zwischen den Elektroden angeordneten Isolator gebildet ist, wobei die von den Elektroden und dem dazwischenliegenden Isolator gebildeten Plasmaerzeugungseinheit jeweils eine im wesentlichen zentrische Öffnung aufweisen, gelingt es, ein Plasma mit geringer räumlicher Ausdehnung und definierter Positionierung zu schaffen, wobei die Abmessungen des Plasmas entsprechend den unterschiedlichen Anforderungen gewählt werden können. Weiters kann durch Vorsehen des zwischen den Elektroden gelagerten Isolators, in dessen insbesondere kreisförmiger Durchtrittsöffnung das Plasma erzeugt und aufrecht erhalten wird, in einfacher Weise und ohne (zusätzliche) Einschlußelemente für das Plasma oder zusätzliche Einrichtungen zur Wärmeabfuhr vorzusehen, eine sichere Begrenzung des Plasmas bei gleichzeitiger Sicherstellung der Wärmeabfuhr aus dem unmittelbaren Bereich des Plasmas erzielt werden. Durch die zu beiden Seiten des Isolators angeordneten Elektroden gelingt weiters auf kleinstem Raum die Einbringung der zur Zündung und Aufrechterhaltung des Plasmas notwendigen Energie, sodaß insgesamt die Erzeugung eines niederenergetischen Plasmas, insbesondere Edelgasplasmas, bei geringer Leistungsaufnahme und geringem Gasverbrauch ermöglicht wird. Neben der Ausbildung der Einrichtung zur Erzeugung des Plasmas mit Elementen einfacher geometrischer Form und insgesamt geringen Abmessungen kann durch die weiters vorgesehene optische Einheit, insbesondere eine Kollimatorlinse, zur Erzeugung eines Parallelstrahlbündels und durch unmittelbare Kombination mit wenigstens einer Detektoreinheit insgesamt eine kleine und leicht handhabbare und einfach zu wartende Gesamtkonstruktion der erfindungsgemäßen Konstruktion zur Verfügung gestellt werden.

Gemäß einer bevorzugten Ausführungsform der erfindungsgemäßen Vorrichtung zum Analysieren gasförmiger Proben ist die Ausbildung hiebei so getroffen, daß in Zufuhrrichtung des Plasmagases gesehen der ersten Elektrode ein weiterer Isolator mit einer der Durchtrittsöffnung im zwischen den Elektroden angeordneten Isolator im wesentlichen entsprechenden Durchtrittsöffnung vorgeschaltet ist. Durch einen in Zufuhrrichtung des Plasmagases gesehen vorgeschalteten Isolator wird eine Abschirmung in Richtung zur Zufuhr des Plasmagases und der Probe erzielt, sodaß eine Beeinträchtigung des zuzuführenden Plasmagases und der zuzuführenden und in weiterer Folge zu analysierenden Probe vermieden werden kann. Hiebei läßt sich insbesondere durch Vorsehen einer entsprechend kleinen Durchtrittsöffnung des vorgeschalteten Isolators, welcher der Durchtrittsöffnung im zwischen den Elektroden angeordneten Isolator entspricht, in welchem das Plasma ausgebildet und begrenzt wird, ein Schutz der Probe gegen eine Zersetzung oder Polymerisation vor Erreichen des Plasmas durch UV-Strahlung bzw. ausgedehnte Glimmentladungen erreichen.

Der dem Plasma vorgeschaltete Isolator könnte, wenn diese Seite auf Erdpotential liegt, auch aus Metall, beispielsweise Pt/Ir, bestehen. Zur Verringerung der Anzahl der Bauteile wird in diesem Zusammenhang gemäß einer weiters bevorzugten Ausführungsform vorgeschlagen, daß die in Zufuhrrichtung des Gases gesehen erste Elektrode mit dem vorgeschalteten Isolator in einem gemeinsamen Bauteil einstückig ausgebildet ist und daß an die der Durchtrittsöffnung im Isolator zur Begrenzung des Plasmas entsprechende Durchtrittsöffnung eine sich insbesondere konisch erweiternde Ausnehmung anschließt.

Für einen Schutz von der Einrichtung zur Erzeugung des Plasmas nachgeschalteten Einrichtungen wird darüberhinaus vorgeschlagen, daß in Zufuhrrichtung des Plasmagases gesehen der zweiten Elektrode ein zusätzlicher Isolator nachgeschaltet ist, dessen Durchtrittsöffnung vorzugsweise geringfügig kleiner ist als die Durchtrittsöffnung der benachbarten Elektrode, wie dies einer weiteren bevorzugten Ausführungsform der erfindungsgemäßen Vorrichtung entspricht. Durch entsprechende Wahl der lichten weite der Durchtrittsöffnung des nachgeschalteten Isolators wird bewirkt, daß ein verbesserter Schutz der Oberfläche der Elektrode erzielbar ist. Weiters wird aufgrund der Tatsache, daß die Durchtrittsöffnung der Elektroden beträchtlich größer ist als die lichte Weite der Durchtrittsöffnung zumindest des zwischen den Elektroden vorgesehenen Isolators, welcher das Plasma begrenzt und definiert, sichergestellt, daß für die nachträgliche Detektion der von der zu analysierenden Probe emittierten Strahlung, insbesondere Atomemission oder Molekülemission, eine ausreichend große Menge an emittierter Strahlung aus der Plasmaerzeugungseinheit austreten kann. In diesem Zusammenhang wird gemäß einer besonders bevorzugten Ausführungsform vorgeschlagen, daß die lichte Weite der Durchtrittsöffnung des in Zufuhrrichtung den Elektroden nachgeschalteten Isolators die lichte Weite der Durchtrittsöffnung des den Elektroden vorgeschalteten Isolators, insbesondere um wenigstens das Doppelte, übersteigt.

Zur Erleichterung des Zusammenbaues der Einrichtung zur Erzeugung des Plasmas, sodaß der aus den Elektroden und den Isolatoren bestehende, zentrale Bereich zur Plasmaerzeugung beispielsweise vorgefertigt werden kann, wird gemäß einer weiteren bevorzugten Ausführungsform vorgeschlagen, daß die Elektroden und Isolatoren entweder mechanisch, beispielsweise durch Federwirkung, miteinander zusammengepreßt sind oder durch an sich bekannte Metall-Keramik-Verbindungen, insbesondere durch Löten im Vakuum oder unter Wasserstoffatmosphäre, miteinander verbunden sind.

Für eine besonders einfache Lagerung der Einrichtung zur Erzeugung des Plasmas wird gemäß einer weiteren bevorzugten Ausführungsform vorgeschlagen, daß die Elektroden sowie der bzw. die Isolatoren der Einrichtung zur Erzeugung des Plasmas in wenigstens einer Halterung aufgenommen und gasdicht gelagert sind, wobei insbesondere aufgrund der Tatsache, daß die räumlichen Abmessungen des Plasmas gering gewählt sind, gemäß einer weiteren bevorzugten Ausführungsform vorgeschlagen wird, daß die Halterungen mit Zentriereinrichtungen für die Elektroden und/oder Isolatoren ausgebildet sind. Derart kann eine vormontierte Einheit bzw. Einrichtung zur Erzeugung des Plasmas einfach in ihrer Gesamtheit ausgetauscht werden, wobei die Zentriereinrichtungen der Halterung eine entsprechend genaue und zuverlässige Positionierung relativ zu den übrigen Elementen und insbesondere relativ zur Zufuhr für das Plasmagas als auch für die zu analysierende Probe als auch zu der nachgeschalteten optischen Einheit sowie der Detektoreinheit ermöglichen.

Wie bereits oben angedeutet, gelingt durch Ausbildung einer kleinbauenden Einrichtung zur Erzeugung des Plasmas, welche mit entsprechend geringer Leistung betrieben werden kann, daß ohne Vorsehen aufwendiger Zusatzeinrichtungen das Auslangen gefunden werden kann, wobei insbesondere auf das Vorsehen zusätzlicher, zumeist einen großen Platzbedarf beanspruchender Kühleinrichtungen verzichtet werden kann. Für einen ordnungsgemäßen Abtransport des Plasmagases und/oder für die Zufuhr eines Znmischgases in dem Bereich der Plasmaerzeugung wird erfindungsgemäß darüberhinaus bevorzugt vorgeschlagen, daß die Halterungen Abführ- und/oder Spülöffnungen, insbesondere für die Zufuhr eines Zumischgases zum Plasmagas, aufweisen. Betreffend die Abfuhr des Plasmagases kann darüberhinaus vorgesehen sein, daß der die Elektroden und/oder die Halterungen aufnehmende Hohlraum mit einem Spülgas beaufschlagbar ist, wie dies einer weiteren bevorzugten Ausführungsform der erfindungsgemäßen Vorrichtung entspricht. Insbesondere bei Vorsehen eines Spülens des die Elektroden und/oder die Halterungen aufnehmenden Hohlraumes mit einem Spülgas ergeben sich Vorteile im Zusammenhang mit den Anforderungen an die Gasdichtheit der Elektrodenanordnung, da in diesem Fall die Anforderungen an die Gasdichtheit der Einrichtung zur Plasmaerzeugung entsprechend geringer angesetzt werden können. Weiters können durch ein derartiges Spülgas die Plasmaabgase kontrolliert abgeführt und gegebenenfalls in weiterer Folge gefiltert werden, wobei für den Abtransport des Plasmagases durch ein derartiges Spülgas darauf geachtet werden muß, daß das Plasmagas durch ein Plasma-hemmendes Gas entsprechend weit verdünnt wird, sodaß es nicht zu unkontrollierten Entladungen im Bereich außerhalb der Einrichtung zur Plasmaerzeugung und insbesondere im Bereich der Energiezufuhr kommt. In ähnlicher Weise kann auch vorgesehen sein, daß der zwischen der Einrichtung zur Erzeugung des Plasmas und der optischen Einheit bestehende Raum mit einem Spülgas beaufschlagbar ist, wie dies einer weiteren bevorzugten Ausführungsform der erfindungsgemäßen Vorrichtung entspricht.

Wie oben bereits angedeutet, gelingt es mit der in der erfindungsgemäßen Vorrichtung vorgesehenen Einrichtung zur Plasmaerzeugung mit engen räumlichen Ausdehnungen, ein entsprechend niederenergetisches Plasma zur Verfügung zu stellen, wobei erfindungsgemäß in diesem Zusammenhang vorgesehen ist, daß die Leistung des Plasmas unter 50 W, vorzugsweise zwischen 3 und 30 W, beträgt, sodaß auch mit einfachen Mitteln eine ausreichende Wärmeabfuhr ohne Vorsehen von aufwendigen Kühlmechanismen erzielbar ist. Für ein Array von Plasmaentladungen ist hiebei diese Leistung für jede einzelne Entladung vorgesehen.

Um ein stabil brennendes Plasma mit einfach und günstig einsetzbaren elektronischen Bauteilen zu erzielen, ist die erfindungsgemäße Vorrichtung im wesentlichen dadurch gekennzeichnet, daß die Anregungs- bzw. Betriebsfrequenz für die Einrichtung zum Erzeugen des Plasmas mit wenigstens 5 kHz, vorzugsweise im Bereich zwischen 50 kHz und 5 GHz, insbesondere mindestens 10 MHz, gewählt ist.

Als Plasmagas wird im Rahmen des Einsatzes der erfindungsgemäßen Vorrichtung bevorzugt vorgeschlagen, daß das Plasmagas in an sich bekannter Weise gewählt ist aus Helium oder Argon, wobei insbesondere Helium aufgrund seiner niedrigen Atommasse als Plasmagas bevorzugt wird, da es kaum Erosionen an den Elektroden verursacht.

Gemäß einer weiters bevorzugten Ausüfhrungsform wird vorgeschlagen, daß der Druck des Plasmagases mit wenigstens 0,01 bar, vorzugsweise zwischen 0,1 und 5 bar, gewählt ist, sodaß sich insbesondere im Bereich von Atmosphärendruck ein niederenergetisches Plasma zum Analysieren von Proben bereitstellen läßt.

Zum Aufbau des Plasmas kann neben der Verwendung von Plasmagas bei unterschiedlichen Einsatzzwecken vorgesehen sein, daß dem Plasmagas ein Zumischgas in einer Menge von maximal 35 Vol.-%, vorzugsweise max. 25 Vol.-%, zugemischt ist, wobei das Zumischgas insbesondere aus CO₂, N₂, Luft, Wasserdampf, Wasserstoff und Sauerstoff gewählt ist, wie dies einer weiteren bevorzugten Ausführungsform entspricht. Hiebei kann darüberhinaus eine dampfförmige Substanz, insbesondere Wasserdampf, über Diffusion oder Permeation in einer thermostatisierten Vorrichtung nahe beim Plasma vorgesehen sein, wodurch der üblicherweise schwierige Transport der Dämpfe zum Plasma über beispielsweise beheizte Leitungen entfallen kann.

Für die gleichzeitige Auswertung bzw. Analyse von unterschiedlichen Wellenlängenbereichen wird gemäß einer weiteren bevorzugten Ausführungsform vorgeschlagen, daß mehrere Detektoreinheiten nebeneinander angeordnet sind und vom Parallelstrahlbündel beaufschlagt sind, wobei gemäß einer besonders bevorzugten Ausführungsform vorgesehen ist, daß eine Mehrzahl von Detektoreinheiten in jeweils gleichem Abstand um eine zentrale Detektoreinheit positioniert sind. Durch Vorsehen einer Mehrzahl von Detektoreinheiten nebeneinander im emittierten Strahlbündel läßt sich somit simultan eine entsprechend rasche und zuverlässige Auswertung erzielen. Hiebei können die jeweils einer Detektoreinheit zugeordneten Interferenzfilter in einer Positionierung eingesetzt werden, welche die bestmögliche Auflösung bzw. Durchlässigkeitskurve sicherstellt, wobei durch Anordnung einer Mehrzahl von Detektoreinheiten nebeneinander darüberhinaus eine sehr einfache Montage und ein einfacher gegebenenfalls erforderlicher Wechsel zwischen einzelnen Detektoreinheiten oder Elementkombinationen ermöglicht wird, welche jeweils aus einem Filter, einer Linsenanordnung und einem Photodetektor mit gegebenenfalls integrierter, elektronischer Auswerteeinrichtung bestehen. Die Verwendung lediglich einer Detektoreinheit kann hiebei beispielsweise für die Analyse von Elementen, wie Kohlenstoff, Wasserstoff, Sauerstoff oder Stickstoff, vorgesehen sein, welche eine spektrale Untergrundkorrektur nicht benötigen, da im wesentlichen ein meßbares, durch Verunreinigungen verursachtes Grundsignal dominiert. Eine Mehrzahl von nebeneinander liegenden Detektoreinheiten kann für die Analyse einer entsprechenden Vielzahl unterschiedlicher Elemente oder beispielsweise auch zur Analyse verschiedener Linien eines Elements zur Steigerung der Selektivität eingesetzt werden, wobei allgemein Wellenlängenkombinationen über einen sehr weiten Bereich als auch für spezielle Einsatzzwecke in nahezu beliebig eng nebeneinander liegenden Bereichen möglich sind. Für die Bestimmung eines Korrekturanteils kann hiebei gemäß einer besonders bevorzugten Ausführungsform vorgesehen sein, daß die zentral angeordnete Detektoreinheit eine gegenüber den anderen Detektoreinheiten geringere Fläche aufweist, wobei mit einer derartigen zentral angeordneten Detektoreinheit geringer Fläche beispielsweise eine Messung von Sauerstoff für Korrekturzwecke vorgenommen werden kann.

Für eine entsprechend gute Ausnutzung der durch entsprechende Wahl der Austrittsöffnung der Einrichtung zur Plasmaerzeugung zur Verfügung gestellten, emittierten Strahlung, welche durch die Durchtrittsöffnung des nachgeschalteten Isolators in der Einrichtung zur Plasmaerzeugung besonders günstig beeinflußt werden kann, wird gemäß einer weiteren bevorzugten Ausführungsform vorgeschlagen, daß die Kollimatorlinse von einer asphärischen Kollimatorlinse mit großem Öffnungsverhältnis gebildet ist.

Für spezielle Einsatzzwecke kann eine Trennung der Einrichtung zur Plasmaerzeugung von den eigentlichen Analyse- bzw. Detektionseinrichtungen günstig sein, wobei in diesem Zusammenhang vorgeschlagen wird, daß zwischen der Einrichtung zur Erzeugung des Plasmas und der wenigstens einen Detektoreinheit in an sich bekannter Weise eine Faseroptik vorgesehen ist, wie dies einer weiteren bevorzugten Ausführungsform der erfindungsgemäßen Vorrichtung zur Analyse gasförmiger Proben entspricht.

Für eine weitere Optimierung des Raumbedarfes kann gemäß einer weiteren bevorzugten Ausführungsform vorgesehen sein, daß zwischen der Einrichtung zur Erzeugung des Plasmas und der wenigstens einen Detektoreinheit in an sich bekannter Weise wenigstens ein Ablenk- oder Umlenkspiegel vorgesehen ist.

Bei Verwendung der erfindungsgemäßen Vorrichtung zur Analyse gasförmiger Proben kann weiters ein Kohlenstoffsignal zum Schutz des Plasmas vor Überladung eingesetzt werden, wobei es für den Fall, daß das Plasma mit organischen Substanzen überladen wird, zu Rußablagerungen in der Entladungszone und aufgrund der elektrischen Leitfähigkeit des Russes gegebenenfalls zu Problemen kommen kann. Derart kann eine kontinuierliche Messung des Kohlenstoffsignals im Plasma bei entsprechender Skalierung dazu dienen, daß nach Überschreiten eines bestimmten Schwellwertes das Plasma für eine bestimmte Zeit abgeschaltet wird, worauf in weiterer Folge das Plasma automatisch wieder gezündet werden kann. Eine derartige automatische Steuerung, welche unter Umständen auch das Verhältnis von Kohlenstoff zu Sauerstoff berücksichtigen kann, läßt sich in einfacher Weise bei vorsehen einer entsprechenden elektrischen bzw. elektronischen Steuerung verwirklichen. In diesem Zusammenhang wird bevorzugt vorgeschlagen, daß mit der Einrichtung zur Erzeugung des Plasmas eine Steuerung zum Ausschalten der Einrichtung zur Erzeugung des Plasmas für einen vorgegebenen Zeitraum bei überschreiten eines Schwellwertes für das Kohlenstoffsignal und anschließendem, neuerlichem Zünden gekoppelt ist.

Weiters läßt sich insbesondere bei Vorsehen einer Mehrzahl von nebeneinander liegenden Detektoreinheiten eine verhältnismäßig einfache Untergrundkorrektur verwirklichen, wobei auch hiebei der große Raumwinkel, welcher durch entsprechende Bemaßung der Austrittsöffnung der Einrichtung zur Plasmaerzeugung erzielbar ist, die gleichzeitige Messung einer Vielzahl von Wellenlängenbereichen und die dadurch erzielbare Unterstützung bei einer Untergrundkorrektur ermöglicht.

Eine Signalverarbeitung der durch separate Messung der unterschiedlichen Signal- und Untergrundintensitäten mit Photodetektoren ermittelten Werte läßt sich ebenfalls in einfacher Weise unter Einsatz von wenigstens teilweise bekannten Auswerteschaltungen bzw. von Mikrocomputern erzielen.

Die erfindungsgemäße Vorrichtung wird nachfolgend anhand von in der beiliegenden Zeichnung schematisch dargestellten Ausführungsbeispielen näher erläutert. In dieser zeigen:
Fig. 1 einen Schnitt durch eine erste Ausführungsform der erfindungsgemäßen Vorrichtung zum Analysieren gasförmiger Proben;
Fig. 2 in vergrößertem Maßstab einen Schnitt durch die Einrichtung zur Erzeugung des Plasmas in der Einrichtung gemäß Fig. 1;
Fig. 3 einen schematischen Schnitt durch eine abgewandelten Ausführungsform einer erfindungsgemäßen Vorrichtung zum Analysieren gasförmiger Proben;
Fig. 4 einen ebenfalls schematischen Schnitt durch eine weitere abgewandelte Ausführungsform einer erfindungsgemäßen Vorrichtung zum Analysieren gasförmiger Proben;
Fig. 5 eine schematische Darstellung teilweise im Schnitt durch eine weitere abgewandelte Ausführungsform einer erfindungsgemäßen Vorrichtung zum Analysieren gasförmiger Proben, wobei zwischen der Einrichtung zur Erzeugung des Plasmas und der Detektoreinheit eine Faseroptik vorgesehen ist;
die Fig. 6a und 6b Teilansichten einer Anordnung einer Mehrzahl von Detektoreinheiten in einer erfindungsgemäßen Vorrichtung zum Analysieren gasförmiger Proben, wobei die schematische Ansicht gemäß Fig. 6a einen nach der Linie VIa-VIa der Fig. 6b darstellt;
die Fig. 7a und 7b in einer zu den Fig. 6a und 6b analogen Darstellung eine abgewandelte Ausführungsform der Anordnung von Detektoreinheiten in einer erfindungsgemäßen Vorrichtung zum Analysieren gasförmiger Proben; und
Fig. 8 in einer zu Fig. 2 ähnlichen Darstellung einen Schnitt durch eine abgewandelte Einrichtung zur Erzeugung des Plasmas in einer erfindungsgemäßen Vorrichtung zum Analysieren gasförmiger Proben.

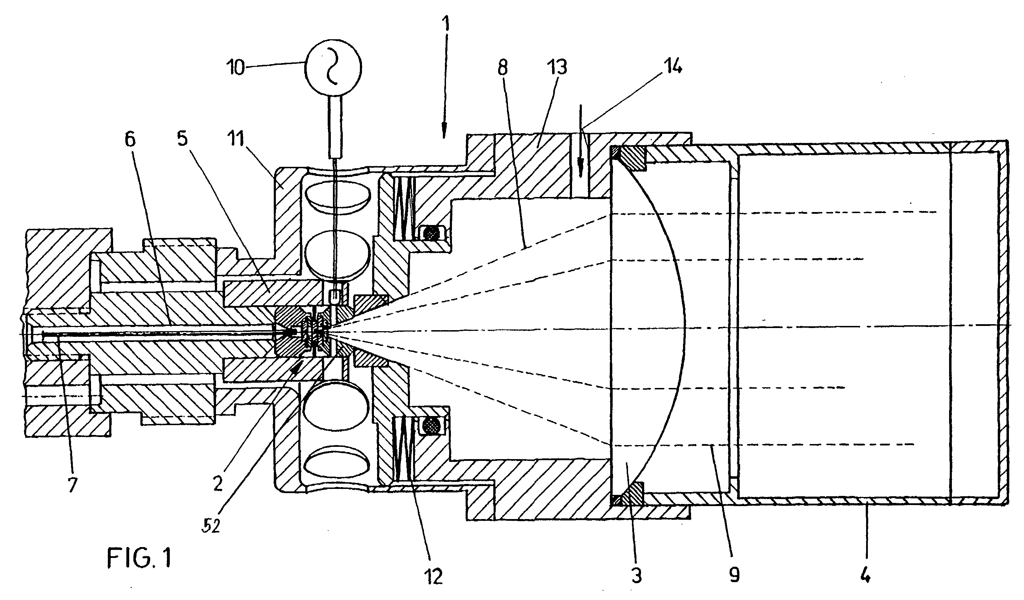

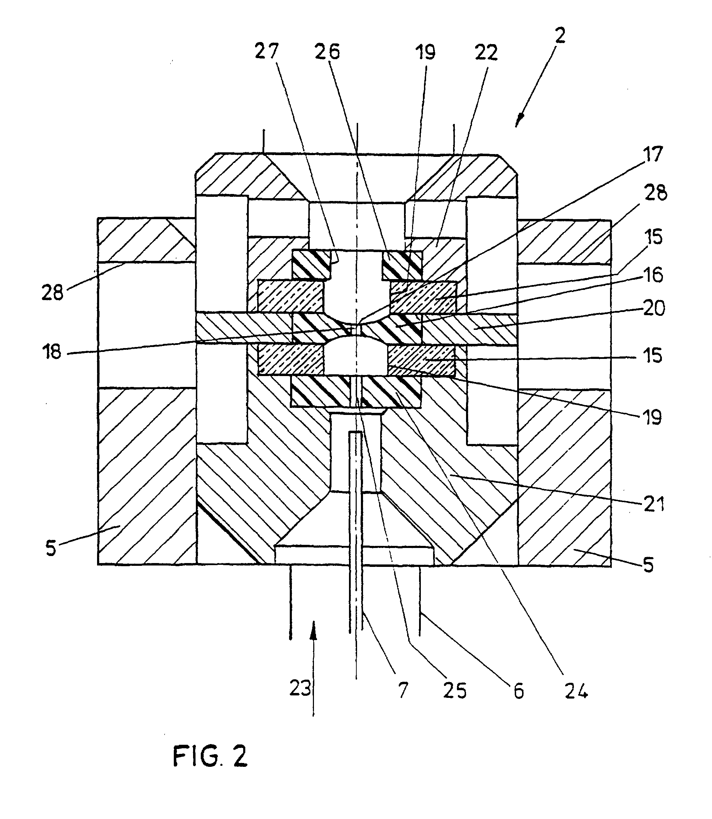

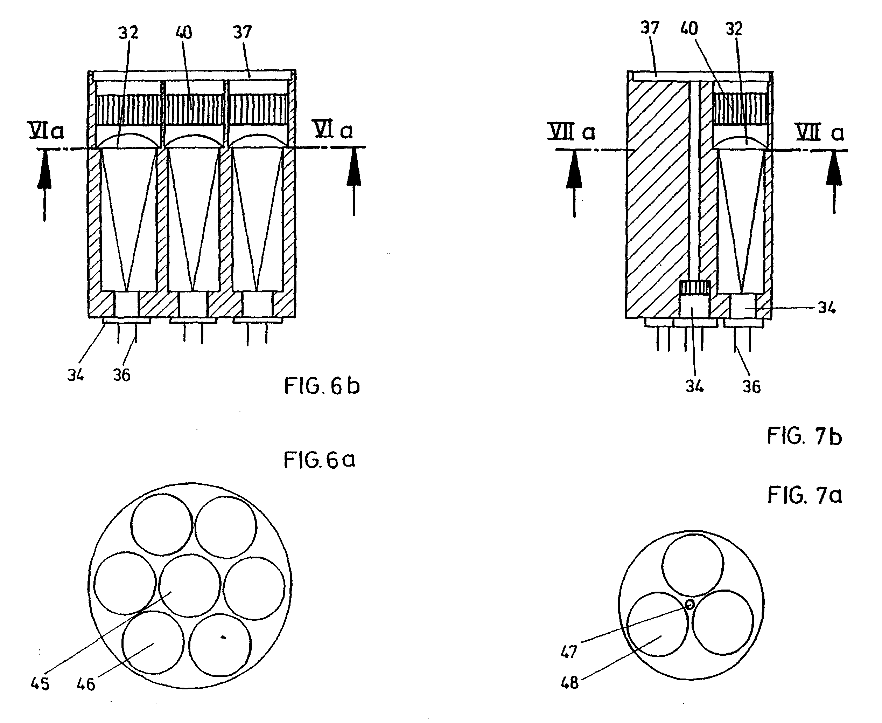

In Fig. 1 ist schematisch mit 1 eine Vorrichtung zum Analysieren gasförmiger Proben bezeichnet, welche aus einer allgemein mit 2 bezeichneten Einrichtung zur Erzeugung eines Plasmas, welche Einrichtung in Fig. 2 detailliert und in größerem Maßstab dargestellt ist, einer optischen Einheit 3, insbesondere einer Kollimatorlinse, und einer in Fig. 1 lediglich schematisch mit 4 angedeuteten Einheit, umfassend wenigstens eine Detektoreinheit, ausgebildet ist. Derartige Detektoreinheiten sind hiebei in den nachfolgenden Figuren und insbesondere in den Fig. 6a und 6b, 7a und 7b im Detail dargestellt.

Die in Fig. 2 näher dargestellte Einrichtung 2 zur Erzeugung des Plasmas ist in entsprechenden Lagerungen aufgenommen und gehalten, wobei die der Einrichtung 2 unmittelbar benachbart liegenden Lagerungen mit 5 bezeichnet sind. Weiters ist schematisch sowohl eine Zufuhr 6 für das Plasmagas als auch eine zentral angedeutete Zufuhr 7 für die in weiterer Folge zu analysierende Probe angedeutet.

Die aus der Einrichtung 2 zur Erzeugung des Plasmas emittierte Strahlung ist im wesentlichen durch den schematisch mit 8 angedeuteten Kegel, beispielsweise durch einen Isolator 52 mit entsprechenden Erzeugenden, begrenzt und trifft in weiterer Folge auf die optische Einheit 3, wodurch ein Parallelstrahlbündel 9 erzeugt wird, welches in der nachgeschalteten Detektoreinheit 4 analysiert werden kann, wie dies unter Bezugnahme auf nachfolgende Figuren noch detaillierter beschrieben werden wird.

Bei der schematischen Darstellung gemäß Fig. 1 ist weiters eine Energiezufuhr 10 für die Einrichtung 2 zur Erzeugung des Plasmas angedeutet und es ist weiters ersichtlich, daß der die Einrichtung 2 sowie die Zufuhr 6 und 7 aufnehmende Gehäuseteil 11 beispielsweise unter Zwischenschaltung von Tellerfedern 12 mit einer weiteren Gehäuseeinheit 13 verbunden ist, in welcher die optische Einheit 3 und die Detektoreinheit 4 aufgenommen sind. Eine Zufuhröffnung zur Einbringung eines Spülgases in den Bereich der optischen Einheit 3 ist hiebei mit 14 angedeutet.

Bei der Darstellung gemäß Fig. 2 ist ersichtlich, daß die Einrichtung 2 zur Erzeugung des Plasmas zwei parallel zueinander angeordnete, scheiben- bzw. ringförmige Elektroden 15 umfaßt, zwischen welchen ein Isolator 16, beispielsweise aus Rubin, Saphir oder allgemein einer nicht- bzw. schlecht leitenden Oxidkeramik angeordnet ist. Der Isolator 16 weist eine Durchtrittsöffnung 17 auf, in welcher in weiterer Folge das Plasma 18 mit exakt definierten Abmessungen erzeugt wird. Jede Elektrode 15 weist ebenfalls eine im wesentlichen kreisförmige Durchtrittsöffnung 19 auf, wobei sowohl die Durchtrittsöffnung 17 des Isolators 16 als auch die Durchtrittsöffnung 19 der Elektroden 15 zueinander zentriert angeordnet sind. Weiters sind, wie dies aus Fig. 2 deutlich ersichtlich ist, die Durchtrittsöffnungen 19 der Elektroden 15 beträchtlich größer als die Durchtrittsöffnung 17 des Isolators 16. Sowohl die Elektroden 15 als auch der Isolator 16 bzw. ein weiterer den Isolator 16 umgebender Isolator 20, welcher eine Funkenbildung an der Außenseite der Elektroden 15 verhindert, sind in Halterungen 21 bzw. 22 aufgenommen, um eine entsprechend dichte und kompakte Gesamteinheit der Einrichtung 2 zur Erzeugung des Plasmas zu bilden, welche beispielsweise vorgefertigt werden kann und in den wiederum mit 5 bezeichneten Halterungen aufgenommen werden kann. Die Elektroden 15 sind darüberhinaus in nicht näher dargestellter Weise, beispielsweise über einen federnden Kontaktstift, mit der in Fig. 1 angedeuteten Energiezufuhr 10 zur Zündung und Aufrechterhaltung des in der Durchtrittsöffnung 17 des Isolators 16 zu erzeugenden Plasmas 18 verbunden.

In Fig. 2 ist darüberhinaus wieder die Zufuhr für das Plasmagas mit 6 als auch eine Zufuhr für eine Probe mit 7 bezeichnet, wobei die Zufuhr 7 beispielsweise von einem Quarzkapillarrohr gebildet sein kann. Über die Zufuhr 6 erfolgt, wie oben bereits angedeutet, die Zufuhr eines Plasmagases, wie beispielsweise Helium oder Argon, und gegebenenfalls eines Zumischgases, wie beispielsweise CO₂, N₂, Luft, Wasserstoff, Wasserdampf oder Sauerstoff, in den Bereich der Elektroden 15 sowie des dazwischen liegenden Isolators 16.

Aus Fig. 2 ist weiters ersichtlich, daß der in Zufuhrrichtung 23 des Plasmagases und der Probe ersten Elektroden 15 vorgeschaltet ein weiterer Isolator 24 vorgesehen ist, welcher eine Durchtrittsöffnung 25 aufweist, deren Abmessungen im wesentlichen den Abmessungen der Durchtrittsöffnung 17 des Isolators 16 zur Erzeugung des Plasmas entsprechen. Dieser in Strömungsrichtung 23 vorgeschaltete Isolator 24 dient im wesentlichen dazu, um ein Durchschlagen des Plasmas 8 in die Zuführungen 6 bzw. 7 sowie eine Beschädigung der umliegenden Elemente zu vermeiden. Weiters ist aus Fig. 2 ersichtlich, daß in Zufuhrrichtung 23 gesehen, der zweiten Elektrode 15 ein weiterer Isolator 26 nachgeschaltet ist, dessen Durchtrittsöffnung 27 zwar geringfügig kleiner ist als die lichte Öffnung 19 der unmittelbar benachbarten Elektrode 15, wobei jedoch die Durchtrittsöffnung 27 dieses nachgeschalteten Isolators 26 die lichte Weite der Durchtrittsöffnung 17 des Isolators 16 beträchtlich übersteigt, sodaß ein entsprechend großer Kegel der emittierten Strahlung und somit eine entsprechend große Ausbeute der in weiterer Folge zu detektierenden bzw. analysierenden Strahlung ermöglicht wird, wie dies in Fig. 1 schematisch durch den Kegel 8 angedeutet ist.

Weiters sind im Bereich der Halterungen bzw. Lagerungen 5, 21 und 22 Abfuhr- bzw. Spülöffnungen 28 vorgesehen, über welche eine Zufuhr von Spülgasen oder auch eine zusätzliche Zufuhr eines Zumischgases zum Plasmagas zur Erzielung einer entsprechenden Gasverteilung im Bereich des Ortes der Plasmaerzeugung möglich wird.

Der Durchmesser der Durchtrittsöffnung 17 des zwischen den Elektroden 15 angeordneten Isolators 16, welcher die Abmessungen und die Position des zu erzeugenden Plasmas definiert, kann hiebei unter 0,5 mm liegen. Demgegenüber beträgt der Durchmesser bzw. die lichte Weite der Öffnungen 19 der Elektroden 15 beispielsweise etwa 0,5 bis 1 mm oder darüber. Die Dicke sowohl der Elektroden 15 als auch der Isolatoren 16, 24 und 26 kann beispielsweise etwa 0,5 mm betragen, wobei beispielsweise durch Vorsehen einer Verjüngung des Isolators 16 in einem mittleren Bereich eine entsprechend verringerte Dicke erzielbar ist.

Es gelingt somit mit einfachen Mitteln eine kompakte Einrichtung zur Erzeugung des Plasmas zur Verfügung zu stellen, durch welche die räumlichen Abmessungen des Plasmas 18 sehr klein und exakt definierbar sind, sodaß bei Atmosphärenbedingungen ein niederenergetisches Plasmas mit einer Leistung von beispielsweise unter 50 W, vorzugsweise zwischen 3 und 30 W, bei Anregungsfrequenzen von wenigstens 5 kHz, beispielsweise zwischen 50 kHz und 5 GHz, insbesondere mindestens 10 MHz, erzielbar ist. Weiters wird als Druck für das Plasmagas wenigstens 0,01 bar, vorzugsweise 0,1 bis 5 bar, gewählt. Aufgrund der geringen Leistung des in der Einrichtung 2 erzeugten Plasmas wird es darüberhinaus möglich, über den Isolator 16 und den daran anschließenden Isolator 22 sicher die entstehende Wärme abzuführen, wobei ein weiterer Kühleffekt durch Zufuhr eines Abfuhr- oder Spülgases durch die Öffnungen 28 in den Halterungen bzw. Lagerungen 5, 21 und 22 ebenfalls möglich ist. Durch vorsehen der Halterungen 21 und 22 sowie des den Isolator 16 umgebenden zusätzlichen Isolators 20 gelingt eine sichere und aufeinander abgestimmte Festlegung der einzelnen, lediglich geringe Abmessungen aufweisenden Einzelelemente 15, 16, 20, 24 und 26 der Einrichtung 2 zur Erzeugung des Plasmas, wobei darüberhinaus die Halterungen 21 und 22 mit zentriereinrichtungen ausgebildet sind oder unmittelbar selbst als zentrierung im Einbau der Einrichtung 2 in den Lagerungen 5 dienen.

Zur Erzielung einer entsprechenden Dichtheit der Einrichtung 2 zwischen den einzelnen Elementen, d.h. insbesondere zwischen den Elektroden 15 und den Isolatoren 16, 24 und 26 können die Halterungen 21 bzw. 22 sowie die Elektroden 15 entsprechend beschichtet sein und es können darüberhinaus die Verbindung der Isolatoren 16, 24 und 26 und der Elektroden 15 beispielsweise mechanisch und durch Vorsehen von Federn oder durch an sich bekannte Metallkeramikverbindungen erfolgen, um die erforderliche Dichtheit zu erlangen. Für den Fall, daß die Anforderungen an die Dichte nicht übermäßig hoch angesetzt werden sollen, kann darüberhinaus durch entsprechende Spülung der Einrichtung 2 ebenfalls für einen ordnungsgemäßen Abtransport von gegebenenfalls aus der Einrichtung 2 zur Erzeugung des Plasmas austretenden Gasen oder Reaktionsprodukten Vorsorge getragen werden.

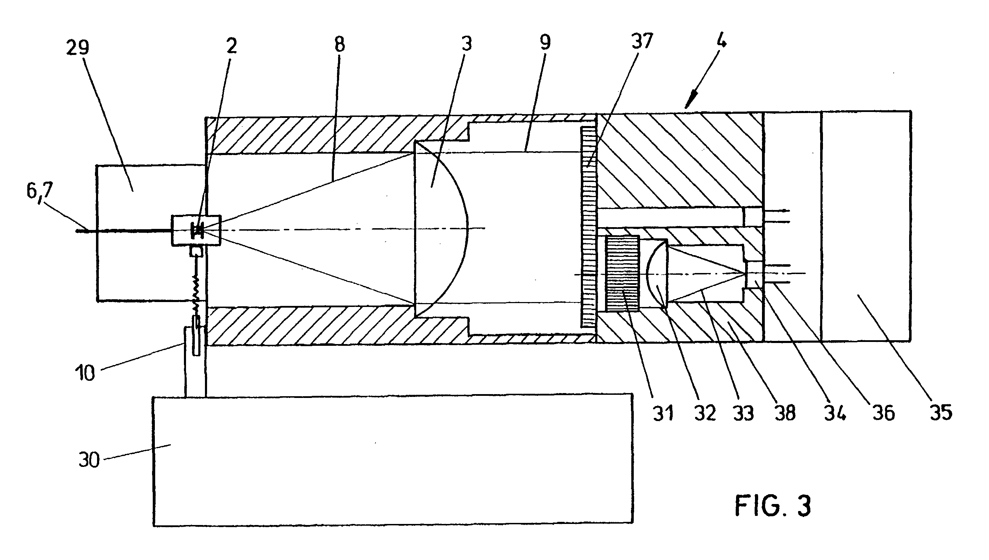

Bei der in Fig. 3 dargestellten, abgewandelten Ausführungsform sind für gleiche Elemente die Bezugszeichen der vorangehenden Figur beibehalten worden. So ist wiederum mit 2 schematisch eine Einrichtung zur Erzeugung eines Plasmas bezeichnet, wobei über Zuleitungen 6 und 7 wiederum die Zufuhr des Plasmagases sowie der zu analysierenden Probe erfolgt. Bei dieser Ausführungsform ist vorgesehen, daß im Bereich der Zufuhr 6, 7 eine schematisch mit 29 angedeutete Heizung eingesetzt werden kann. Die Zufuhr der RF-Energie erfolgt wiederum über eine schematisch mit 10 angedeutete Zuleitung von einem Generator 30.

Der Einrichtung 2 zur Erzeugung des Plasmas ist wiederum eine optische Einheit, insbesondere eine Kollimatorlinse 3, nachgeschaltet, welche zur Erzielung eines Parallelstrahlbündels 9 dient, welches auf eine wiederum mit 4 bezeichnete Detektoreinheit trifft. In dieser Detektoreinheit sind ein Interferenzfilter 31 und eine Linsenanordnung 32 vorgesehen, worauf der zu detektierende Strahl 33 auf einen Photodetektor 34 trifft, dessen Ausgangsleitungen 36 zu einer schematisch mit 35 bezeichneten Elektronik führen. Hiebei sind Detektoreinheiten mit unterschiedlichen Abmessungen vorgesehen, wie dies unter Bezugnahme auf Fig. 7 noch näher im Detail erörtert werden wird. Der Detektoreinrichtung 4 kann darüberhinaus ein Glasfilter 37 vorgeschaltet sein. Zur Aufrechterhaltung geeigneter und gleichbleibender Bedingungen bei der Detektion ist darüberhinaus ein thermostatisierter Filterhalter mit 38 bezeichnet.

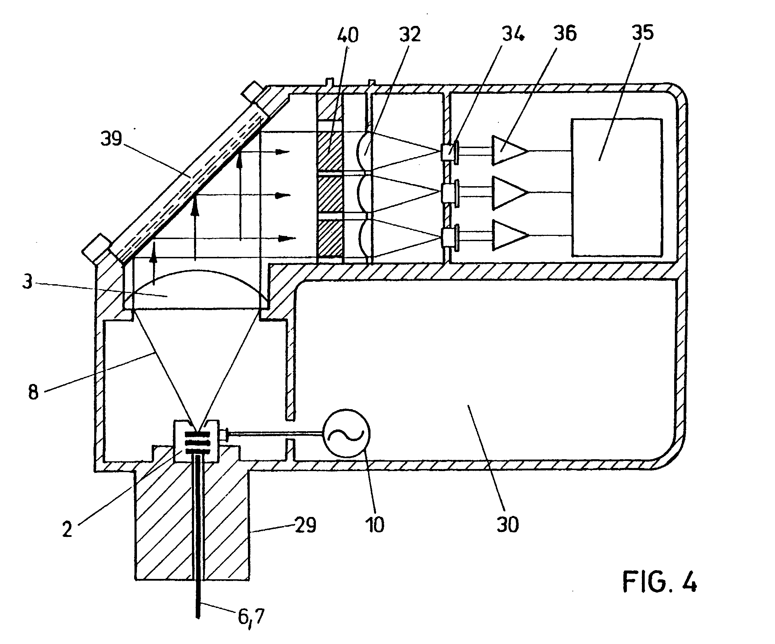

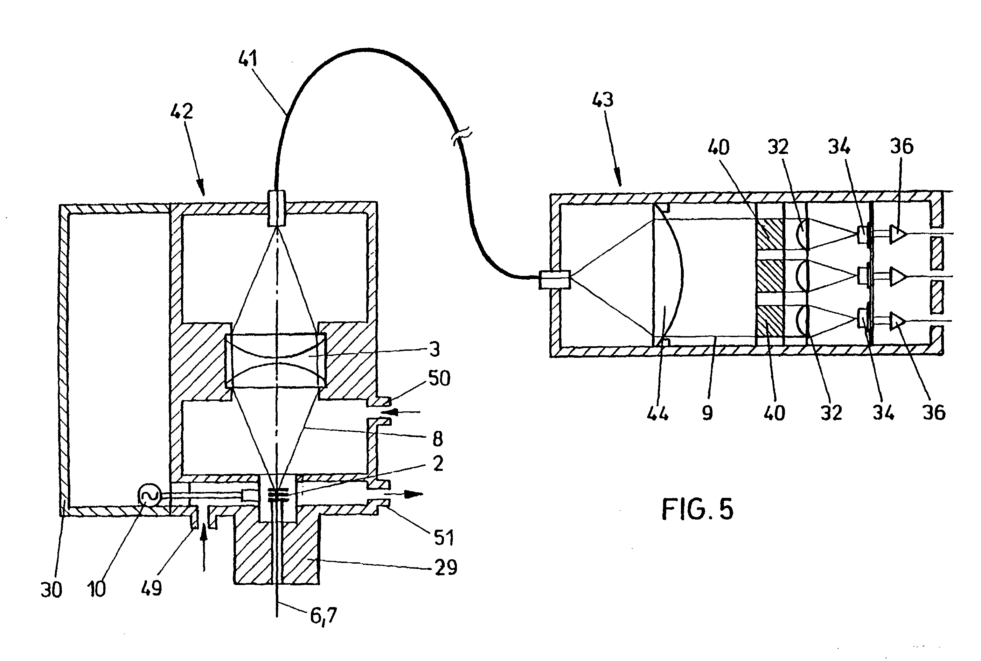

Bei der wiederum abgewandelten Ausführungsform gemäß Fig. 4 findet wiederum eine Einrichtung 2 zur Erzeugung eines Plasmas Verwendung, wobei der Einrichtung 2 über Zufuhrleitungen 6, 7 das Plasmagas sowie die Probe zugeführt werden. Der Plasmaerzeugungseinrichtung 2 ist eine Kollimatorlinse 3 nachgeschaltet, worauf das durch die Kollimatorlinse 3 erzeugte Parallelstrahlbündel auf einen Umlenk- bzw. Ablenkspiegel 39 geleitet wird und in weiterer Folge das Parallelstrahlbündel wiederum einer Mehrzahl von Detektoreinheiten zugeführt wird, wobei ähnlich wie bei der vorangehenden Ausführungsform einem Interferenzfilter 40 eine Vielzahl von Linsen 32 nachgeschaltet ist, durch welche eine Fokussierung jeweils eines Teilbereiches des parallelstrahlbündels auf Photodetektoren 34 erfolgt, welche über wiederum mit 36 bezeichnete Auswertungs- bzw. Verstärkungselemente einer elektronischen Auswertung 35 zugeführt werden.

Bei der in Fig. 5 schematisch dargestellten Ausführungsform ist der Einrichtung 2 zur Erzeugung des Plasmas eine eine Mehrzahl von Linsen umfassende, optische Einheit 3 nachgeschaltet, durch welche eine Fokussierung des emittierten Strahlenbündels 8 auf eine allgemein mit 41 bezeichnete Faseroptik vorgenommen wird. Es ist somit ersichtlich, daß bei der in Fig. 5 dargestellten Ausführungsform eine Trennung der Vorrichtung zum Analysieren gasförmiger Proben in eine Einheit 42, in welcher eine Erzeugung des Plasmas erfolgt, und eine Einheit 43 vorgenommen wird, in welcher im wesentlichen eine Mehrzahl von Detektoreinheiten angeordnet sind, wobei zusätzlich zu den vorangehenden Ausführungsformen in der Einheit 43 eine entsprechende optische Einheit, beispielsweise eine Kollimatorlinse 44, vorgesehen ist, um ein Parallelstrahlbündel zu erzeugen, welches in weiterer Folge nach Passieren 40 der Interferenzfilter sowie der Linsenanordnungen 32 eine Detektion in einer Mehrzahl von Detektoren 34 sowie eine nachfolgende Auswertung in Elementen 35 und 36 ermöglicht. Weiters sind Öffnungen 49, 50 zur Zufuhr eines Spülgases in den Bereich der Einrichtung 2 als auch vor der optischen Einrichtung 3 angedeutet, wobei eine gemeinsame Austrittsöffnung mit 51 bezeichnet ist.

Anstelle der in Fig. 5 dargestellten Einheit 43 kann naturgemäß ein beliebiges, insbesondere wiederum über eine Faseroptik gekoppeltes Spektrometer, beispielsweise an an sich bekanntes Minispektrometer, gegebenenfalls unter Verwendung von Photodetektoren eingesetzt werden.

In Fig. 6a und 6b ist schematisch die gegenseitige Anordnung einer Mehrzahl von Detektoreinheiten dargestellt, wie sie beispielsweise in den Ausbildungen gemäß Fig. 4 und 5 angedeutet sind. Aus der Fig. 6a ist ersichtlich, daß um eine im wesentlichen zentral angeordnete Detektoreinheit 45 eine Mehrzahl von in gleichen Abständen angeordneten, weiteren Detektoreinheiten 46 vorgesehen ist, wobei jede der Detektoreinheiten 45 und 46 wiederum ein Interferenzfilter 40, eine Linsenanordnung 32 sowie einen Photodetektor 34 mit Ausgangsleitungen bzw. ersten Auswerteeinheiten 36 umfaßt. Weiters kann den Interferenzfiltern 40 wiederum ein Glasfilter 37 vorgeschaltet sein. Mit einer derartigen Anordnung kann somit gleichzeitig eine Vielzahl von unterschiedlichen Wellenlängen bei gegebenenfalls erforderlicher, gleichzeitiger Korrektur eines Untergrundes analysiert und entsprechend bearbeitet werden.

Bei der Darstellung gemäß den Fig. 7a und 7b ist ersichtlich, daß neben einer zentralen Detektoreinheit 47 mit vergleichsweise geringer Durchtrittsfläche wiederum in ebenfalls gleichem Abstand eine Mehrzahl von Detektoreinheiten 48 angeordnet ist, wobei jede Detektoreinheit 48 wiederum ein Interferenzfilter 40, eine Linsenanordnung 32 sowie einen Photodetektor 34 mit nachgeschalteter Auswertung bzw. Steuerungselementen 36 aufweist. Demgegenüber ist die zentrale Detektoreinheit 47 ohne Vorsehen einer Linsenanordnung im wesentlichen lediglich mit einem Photodetektor 34 versehen. Eine derartige Anordnung mit einer Mehrzahl von Detektoreinheiten ist beispielsweise in der Ausführungsform gemäß Fig. 3 angedeutet. Auch bei dieser Anordnung einer Mehrzahl von Detektoren 47 und 48 kann gleichzeitig eine Mehrzahl von Wellenlängen detektiert und analysiert werden, wobei die kleine Detektoreinheit 47 in der Mitte beispielsweise zur Messung von Sauerstoff als Rorrekturgröße dienen kann.

Die Auswertung der Signale der einzelnen Detektoren 34 in den schematisch mit 35 angedeuteten Auswerteeinheiten erfolgt beispielsweise nach einer separaten Messung diverser Signal- und Untergrundintensitäten unter Vornahme einer Untergrundkorrektur. Insgesamt ist ersichtlich, daß durch Vorsehen einer Mehrzahl von Detektoreinheiten 45, 46, 47, 48 in jeweils einer kompakten Einheit, welche für sich gesehen leicht ausgetauscht werden kann, bei entsprechend geringem Platzbedarf eine Vielzahl von Daten analysiert bzw. gleichzeitig ermittelt werden kann.

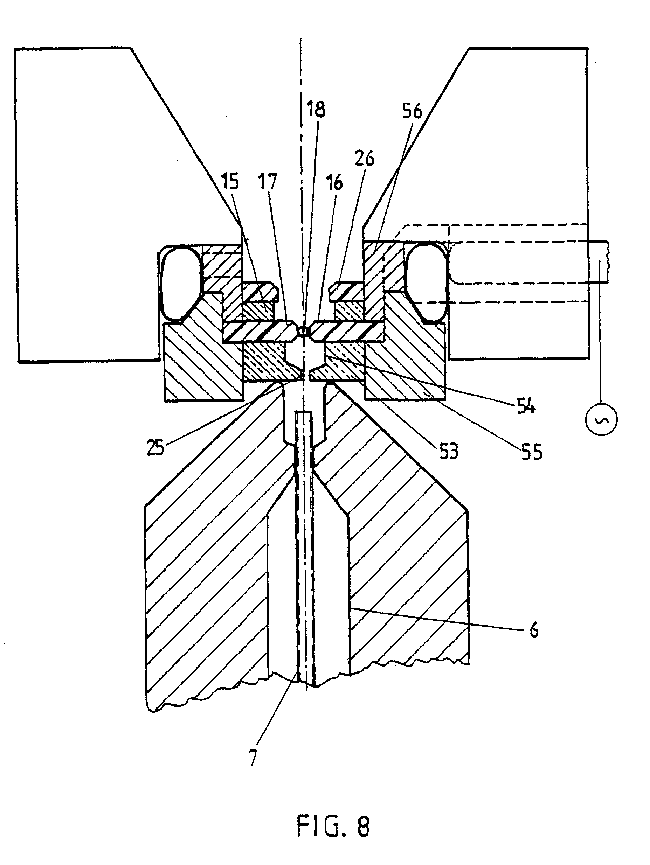

In Fig. 8 ist in einer zu Fig. 2 ähnlichen Darstellung eine abgewandelte Einrichtung 2 zur Erzeugung des Plasmas in einer Vorrichtung zum Analysieren gasförmiger Proben wiederum in vergrößertem Maßstab dargestellt, wobei für gleiche Bauteile die Bezugszeichen der Fig. 2 beibehalten wurden. So weist wiederum der Isolator 16 eine Durchtrittsöffnung 17 auf, in welcher in weiterer Folge das Plasma 18 begrenzt wird. Die Zufuhr für eine Probe ist mit 7 bezeichnet. Der Isolator 16 zur Begrenzung des Plasmas 18 ist wiederum zwischen zwei ring- bzw. scheibenförmigen Elektroden angeordnet, wobei die in Zufuhrrichtung nachgeschaltete Elektrode 15 wiederum ähnlich zur Ausführungsform gemäß Fig. 2 ausgebildet ist. Im Gegensatz zu dieser Ausführungsform ist die in Zufuhrrichtung gesehen vorgeschaltete Elektrode gemeinsam mit einem der ersten Elektrode vorgeschalteten Isolator ausgebildet, wobei diese Einheit mit 53 bezeichnet ist. Die Einheit 53 weist wiederum eine Eintritts- bzw. Durchtrittsöffnung 25 auf, welche im wesentlichen der Durchtrittsöffnung 17 des Isolators 16 zur Begrenzung des Plasmas 18 entspricht. Ausgehend von der Durchtrittsöffnung 25 der Einheit 53 ist diese mit einer sich konisch erweiternden bzw. im wesentlichen topfförmigen Ausnehmung 54 ausgebildet, sodaß sich insgesamt für die zwischen den Elektroden auszubildenden Feldlinien zur Begrenzung des Plasmas 18 wiederum eine im wesentlichen der Ausführungsform gemäß Fig. 2 entsprechende Konfiguration ergibt. Hiebei kann die sich konisch erweiternde bzw. topfförmige Ausnehmung 54 zur Erzielung der entsprechenden geometrischen Erfordernisse mit einer Tiefe ausgebildet sein, welche etwa dem zweifachen Durchmesser derselben entspricht.

Die von den Elektroden und den Isolatoren gebildete Einheit 53 ist wiederum in Halterungen aufgenommen, welche bei der in Fig. 6 gezeigten Ausführungsform mit 55 und 56 bezeichnet sind. Aus Fig. 6 ist weiters ersichtlich, daß sich der Isolator 16 zur Begrenzung des Plasmas 18 bis zu den Halterungen 55 bzw. 56 erstreckt, sodaß insgesamt bei der in Fig. 6 dargestellten Ausführungsform mit einer verringerten Anzahl von aufeinander abzustimmenden bzw. miteinander zu verbindenden Einzelteilen das Auslangen gefunden werden kann.

## Patentansprüche

1. Vorrichtung zum Analysieren gasförmiger Proben, umfassend eine Einrichtung (2) zur Erzeugung eines Plasmas, eine zuführeinrichtung (7) für die zu analysierende Probe und wenigstens eine Detektoreinheit (4), welche insbesondere wenigstens ein Interferenzfilter, eine Linsenanordnung und einen Photodetektor zur Erfassung einer von der zu analysierenden Probe emittierten Strahlung, insbesondere Atomemission oder Molekülemission, aufweist, **dadurch gekennzeichnet, daß** die Einrichtung (2) zur Erzeugung des Plasmas von zwei in Abstand parallel voneinander angeordneten, insbesondere ring- bzw. scheibenförmigen Elektroden (15, 53) mit jeweils einer im wesentlichen zentrischen, insbesondere kreisförmigen, Durchtrittsöffnung (19, 54) und einem zwischen den Elektroden (15, 53) angeordneten Isolator (16) mit insbesondere kreisförmiger Durchtrittsöffnung (17) zur Begrenzung des Plasmas (18) gebildet ist und daß zwischen der Einrichtung (2) zur Erzeugung des Plasmas und der Detektoreinheit (4) eine optische Einheit, insbesondere eine Kollimatorlinse (3), zur Erzeugung eines Parallelstrahlbündels (9) vorgesehen ist.

2. Vorrichtung nach Anspruch 1, **dadurch gekennzeichnet, daß** in Zufuhrrichtung (23) des Plasmagases gesehen der ersten Elektrode (15) ein weiterer Isolator (24) mit einer der Durchtrittsöffnung (17) im zwischen den Elektroden (15) angeordneten Isolator (16) im wesentlichen entsprechenden Durchtrittsöffnung (25) vorgeschaltet ist.

3. Vorrichtung nach Anspruch 2, **dadurch gekennzeichnet, daß** die in Zufuhrrichtung des Gases gesehen erste Elektrode mit dem vorgeschalteten Isolator in einem gemeinsamen Bauteil (52) einstückig ausgebildet ist und daß an die der Durchtrittsöffnung (17) im Isolator (16) zur Begrenzung des Plasmas (18) entsprechende Durchtrittsöffnung (25) eine sich insbesondere konisch erweiternde Ausnehmung (54) anschließt.

4. Vorrichtung nach Anspruch 2 oder 3, **dadurch gekennzeichnet, daß** in Zufuhrrichtung (23) des Plasmagases gesehen der zweiten Elektrode (15) ein zusätzlicher Isolator (26) nachgeschaltet ist, dessen Durchtrittsöffnung (27) vorzugsweise geringfügig kleiner ist als die Durchtrittsöffnung (19) der benachbarten Elektrode (15).

5. Vorrichtung nach Anspruch 2, 3 oder 4, **dadurch gekennzeichnet, daß** die lichte Weite der Durchtrittsöffnung (27) des in Zufuhrrichtung (23) den Elektroden (15) nachgeschalteten Isolators (26) die lichte Weite der Durchtrittsöffnung (25) des den Elektroden (15) vorgeschalteten Isolators (24, 53), insbesondere um wenigstens das Doppelte, übersteigt.

6. Vorrichtung nach einem der Ansprüche 1 bis 5, **dadurch gekennzeichnet, daß** die Elektroden (15, 53) und Isolatoren (16, 24, 26) entweder mechanisch, beispielsweise durch Federwirkung, miteinander zusammengepreßt sind oder durch an sich bekannte Metall-Keramik-Verbindungen, insbesondere durch Löten im Vakuum oder unter Wasserstoffatmosphäre, miteinander verbunden sind.

7. Vorrichtung nach einem der Ansprüche 1 bis 6, **dadurch gekennzeichnet, daß** die Elektroden (15, 53) sowie der bzw. die Isolatoren (16, 24, 26) der Einrichtung (2) zur Erzeugung des Plasmas in wenigstens einer Halterung (21, 22, 5, 55, 54) aufgenommen und gasdicht gelagert sind.

8. Vorrichtung nach Anspruch 7, **dadurch gekennzeichnet, daß** die Halterungen (21, 22) mit zentriereinrichtungen für die Elektroden (15) und/oder Isolatoren (16, 24, 26) ausgebildet sind.

9. Vorrichtung nach Anspruch 7 oder 8, **dadurch gekennzeichnet, daß** die Halterungen (21, 22, 5) Abführ- und/oder Spülöffnungen (28), insbesondere für die Zufuhr eines Zumischgases zum Plasmagas, aufweisen.

10. Vorrichtung nach einem der Ansprüche 6 bis 9, **dadurch gekennzeichnet, daß** der die Elektroden (15, 53) und/oder die Halterungen (21, 22) aufnehmende Hohlraum mit einem Spülgas beaufschlagbar ist.

11. Vorrichtung nach einem der Ansprüche 1 bis 10, **dadurch gekennzeichnet, daß** der zwischen der Einrichtung (2) zur Erzeugung des Plasmas und der optischen Einheit (3) bestehende Raum mit einem Spülgas beaufschlagbar ist.

12. Vorrichtung nach einem der Ansprüche 1 bis 11, **dadurch gekennzeichnet, daß** die Leistung des Plasmas (18) unter 50 W, vorzugsweise zwischen 3 und 30 W, beträgt.

13. Vorrichtung nach einem der Ansprüche 1 bis 12, **dadurch gekennzeichnet, daß** die Anregungs- bzw. Betriebsfrequenz für die Einrichtung (2) zur Erzeugung des Plasmas mit wenigstens 5 kHz, vorzugsweise im Bereich zwischen 50 kHz und 5 GHz, insbesondere mindestens 10 MHz, gewählt ist.

14. Vorrichtung nach einem der Ansprüche 1 bis 13, **dadurch gekennzeichnet, daß** das Plasmagas in an sich bekannter Weise gewählt ist aus Helium oder Argon.

15. Vorrichtung nach einem der Ansprüche 1 bis 14, **dadurch gekennzeichnet, daß** der Druck des Plasmagases mit wenigstens 0,01 bar, vorzugsweise zwischen 0,1 und 5 bar, gewählt ist

16. Vorrichtung nach einem der Ansprüche 1 bis 15, **dadurch gekennzeichnet, daß** dem Plasmagas ein Zumischgas in einer Menge von maximal 35 Vol.-%, vorzugsweise max. 25 Vol.-%, zugemischt ist, wobei das Zumischgas insbesondere aus CO₂, N₂, Luft, Wasserdampf, Wasserstoff und Sauerstoff gewählt ist.

17. Vorrichtung nach einem der Ansprüche 1 bis 16, **dadurch gekennzeichnet, daß** mehrere Detektoreinheiten (45, 46, 47, 48) nebeneinander angeordnet sind und vom Parallelstrahlbündel beaufschlagt sind.

18. Vorrichtung nach Anspruch 17, **dadurch gekennzeichnet, daß** eine Mehrzahl von Detektoreinheiten (46, 48) in jeweils gleichem Abstand um eine zentral angeordnete Detektoreinheit (45, 47) positioniert sind.

19. Vorrichtung nach Anspruch 18, **dadurch gekennzeichnet, daß** die zentral angeordnete Detektoreinheit (47) eine gegenüber den anderen Detektoreinheiten (48) geringere Fläche aufweist.

20. Vorrichtung nach einem der Ansprüche 1 bis 19, **dadurch gekennzeichnet, daß** die Kollimatorlinse (3) von einer asphärischen Kollimatorlinse mit großem Öffnungsverhältnis gebildet ist.

21. Vorrichtung nach einem der Ansprüche 1 bis 20, **dadurch gekennzeichnet, daß** zwischen der Einrichtung (2) zur Erzeugung des Plasmas und der wenigstens einen Detektoreinheit (43) in an sich bekannter Weise eine Faseroptik (41) vorgesehen ist.

22. Vorrichtung nach einem der Ansprüche 1 bis 21, **dadurch gekennzeichnet, daß** zwischen der Einrichtung (2) zur Erzeugung des Plasmas und der wenigstens einen Detektoreinheit (4) in an sich bekannter Weise wenigstens ein Ablenk- oder Umlenkspiegel (39) vorgesehen ist.

23. Vorrichtung nach einem der Ansprüche 1 bis 22, **dadurch gekennzeichnet, daß** mit der Einrichtung (2) zur Erzeugung des Plasmas eine Steuerung zum Ausschalten der Einrichtung (2) zur Erzeugung des Plasmas für einen vorgegebenen Zeitraum bei Überschreiten eines Schwellwertes für das Kohlenstoffsignal und anschließendem, neuerlichem Zünden gekoppelt ist.

## Claims

1. Device for analyzing gaseous samples comprising a device (2) for generating a plasma, a feeding device (7) for the sample to be analyzed and at least one detector unit (4) which in particular comprises at least one interference filter, a lens arrangement and a photodetector for detecting radiation, especially atomic emission or molecular emission, emitted by the sample to be analyzed, **characterized in that** the device (2) for generating the plasma is made up of two in particular ring- or disk-shaped, parallel, interspaced electrodes (15, 53), each having one essentially centrical, in particular circular through-opening (19, 54), and an isolator (16) being positioned between the electrodes (15, 53) and having a particularly circular through-opening (17) for confining the plasma (18) and that between said device (2) for generating the plasma and the detector unit (4) an optical unit (3), in particular a collimator lens for generating a parallel ray beam (9) is provided.

2. Device as claimed in claim 1, **characterized in that**, viewed with respect to the direction (23) of plasma gas flow, another isolator (24) with a through-opening (25), which is essentially equivalent to said through-opening (17) of said isolator (16) positioned between said electrodes (15), is positioned upstream of said first electrode (15).

3. Device as claimed in claim 2, **characterized in that** the first electrode, viewed with respect to the direction of gas flow, and the isolator positioned upstream of it are combined into one single component (52), and that the through-opening (25) corresponding to said through-opening (17) in the isolator (16) confining said plasma (18) is followed by a preferably conically expanding duct (54).

4. Device as claimed in claim 2 or 3, **characterized in that** an additional isolator (26) is positioned downstream of the, viewed with respect to the direction (23) of gas flow, second electrode (15), the through-opening (27) of said isolator being slightly smaller than said through-opening (19) of the adjacent electrode (15).

5. Device as claimed in claim 2, 3 or 4, **characterized in that** the internal diameter of the through-opening (27) in the isolator (26) positioned downstream of said electrodes (15) is at least two times the internal diameter of the through-opening (25) in the isolator (24, 53) positioned upstream of said electrodes (15).

6. Device as claimed in any one of claims 1 to 5, **characterized in that** said electrodes (15, 53) and isolators (16, 24, 26) are either pressed together mechanically, for example by spring action or bonded together by known techniques of metal-ceramic bonding, in particular by soldering in vacuum or hydrogen atmosphere.

7. Device as claimed in any one of claims 1 to 6, **characterized in that** said electrodes (15, 53) and said isolator or isolators (16, 24, 26) of device (2) for generating the plasma are held in at least one fixture (21, 22, 5, 55, 54) and are mounted in a gas-tight manner.

8. Device as claimed in claim 7, **characterized in that** the fixtures (21, 22) are equipped with centering mounts for said electrodes (15) and/or isolators (16, 24, 26).

9. Device as claimed in claim 7 or 8, **characterized in that** said fixtures (21, 22, 5) have outlets or purging holes (28), in particular for supplying an additive gas to the plasma gas.

10. Device as claimed in any one of claims 6 to 9, **characterized in that** the cavity housing said electrodes (15, 53) and/or said fixtures (21, 22) can be purged with a purge gas.

11. Device as claimed in any one of claims 1 to 10, **characterized in that** the space between said device (2) for generating the plasma and said optical unit (3) can be purged with a purge gas.

12. Device as claimed in any one of claims 1 to 11, **characterized in that** the power of the plasma (18) is below 50 W, and preferably between 3 and 30 W.

13. Device as claimed in any one of claims 1 to 12, **characterized in that** the excitation or operating frequency for said device (2) for generating the plasma is selected to be at least 5 kHz, preferably in the range of 50 kHz to 5 GHz, and more preferably above 10 MHz.

14. Device as claimed in any one of claims 1 to 13, **characterized in that** the plasma gas is selected from helium or argon in a manner known per se.

15. Device as claimed in any one of claims 1 to 14, **characterized in that** the pressure of the plasma gas is selected to be at least 0.01 bars, preferably between 0.1 and 5 bars.

16. Device as claimed in any one of claims 1 to 15, **characterized in that** an additive gas is admixed to said plasma gas at a level of at most 35 vol.-%, preferably less than 25 vol.-%, wherein said additive gas is preferably selected from CO₂, N₂, air, water vapor, hydrogen and oxygen.

17. Device as claimed in any one of claims 1 to 16, **characterized in that** several detector units (45, 46, 47, 48) are arranged side by side and are by the parallel ray beam.

18. Device as claimed in claim 17, **characterized in that** a multitude of detector units (46, 48) are positioned each at the same distance from, and around a centrally positioned detector unit (45, 47).

19. Device as claimed in claim 18, **characterized in that** the centrally positioned detector unit (47) has an area smaller than that of the other detector units (48).

20. Device as claimed in any one of claims 1 to 19, **characterized in that** collimator lens (3) is formed by an aspheric collimator lens of high aperture.

21. Device as claimed in any one of claims 1 to 20, **characterized in that** between said device (2) for generating the plasma and the at least one detector unit (43) a fiber-optic link (41) is provided in a known manner.

22. Device as claimed in any one of claims 1 to 21, **characterized in that** between said device (2) for generating the plasma and the at least one detector unit (4) a deflecting or folding mirror (39) is provided.

23. Device as claimed in any one of claims 1 to 22, **characterized in that** said device (2) for generating the plasma is coupled to an automatic control for switching off said device (2) for generating the plasma as soon as a threshold value for the carbon signal is exceeded, and subsequent re-ignition of the same.

## Revendications

1. Dispositif d'analyse d'échantillons gazeux, comprenant une installation (2) destinée à produire un plasma, une installation d'amenée (7) de l'échantillon à analyser et au moins une unité de détection (4), comportant en particulier au moins un filtre d'interférence, un agencement de lentilles ou un photodétecteur pour détecter un rayonnement émis par un échantillon à analyser, en particulier une émission atomique ou une émission de molécules, **caractérisé en ce que** l'installation (2) destinée à produire un plasma est constituée par deux électrodes espacées parallèlement, ayant en particulier une forme annulaire ou en disque (15, 53) comportant respectivement une ouverture de passage pratiquement centrée, en particulier circulaire (19, 54), et un isolateur (16), agencé entre les électrodes (15, 53), comportant en particulier une ouverture de passage circulaire (17) destinée à limiter le plasma (18), une unité optique, plus spécifiquement une lentille de collimation (3) destinée à produire un faisceau de rayonnement parallèle (9) étant agencée entre l'installation (2) destinée à produire le plasma et l'unité de détection (4).

2. Dispositif selon la revendication 1, **caractérisé en ce qu'**un isolateur supplémentaire (24) comportant une ouverture de passage (25) correspondant pour l'essentiel à l'ouverture de passage (17) dans l'isolateur (16) agencé entre les électrodes (15) est monté en amont de la première électrode (15) dans le sens d'amenée (23) du gaz plasma.

3. Dispositif selon la revendication 2, **caractérisé en ce que** la première électrode, vue dans le sens d'amenée du gaz, est formée d'une seule pièce avec l'isolateur monté en amont dans un composant commun (52), un évidement à extension pratiquement conique (54) étant raccordé à l'ouverture de passage (25) correspondant à l'ouverture de passage (17) dans l'isolateur (16) destinée à limiter le plasma (18).

4. Dispositif selon les revendications 2 ou 3, **caractérisé en ce qu'**un isolateur supplémentaire (26), dont l'ouverture de passage (27) est de préférence légèrement plus petite que l'ouverture de passage (19) de l'électrode avoisinante (15), est monté en aval de la deuxième électrode (15) dans le sens d'amenée (23) du gaz plasma.

5. Dispositif selon les revendications 2, 3 ou 4, **caractérisé en ce que** le diamètre intérieur de l'ouverture de passage (27) de l'isolateur (26) monté en aval des électrodes (15) dans le sens d'amenée (23) est supérieur, en particulier par au moins le double, au diamètre intérieur de l'ouverture de passage (25) de l'isolateur (24, 53) monté en amont des électrodes (15).

6. Dispositif selon l'une des revendications 1 à 5, **caractérisé en ce que** les électrodes (15, 53) et les isolateurs (16, 24, 26) sont assemblés par pression de manière mécanique, par exemple par une action élastique, ou assemblées par des liaisons métal-céramique connues, en particulier par soudure sous vide ou dans une atmosphère d'hydrogène.

7. Dispositif selon l'une des revendications 1 à 6, **caractérisé en ce que** les électrodes (15, 53) et les isolateurs (16, 24, 26) de l'installation (2) destinée à produire le plasma sont reçus dans au moins un support (21, 22, 5, 55, 54) et agencés de manière étanche aux gaz.

8. Dispositif selon la revendication 7, **caractérisé en ce que** les supports (21, 22) comportent des dispositifs de centrage pour les électrodes (15) et/ou les isolateurs (16, 24, 26).

9. Dispositif selon les revendications 7 ou 8, **caractérisé en ce que** les supports (21, 22, 5) comportent des ouvertures d'évacuation et/ou de rinçage (28), en particulier pour l'amenée d'un gaz de mélange pour le gaz plasma.

10. Dispositif selon l'une des revendications 6 à 9, **caractérisé en ce que** l'espace creux recevant les électrodes (15, 53) et/ou les supports (21, 22) peut être assujetti à un gaz de rinçage.

11. Dispositif selon l'une des revendications 1 à 10, **caractérisé en ce que** l'espace établi entre l'installation (2) destinée à produire le plasma et l'unité optique (3) peut être assujetti à un gaz de rinçage.

12. Dispositif selon l'une des revendications 1 à 11, **caractérisé en ce que** la puissance du plasma (18) est inférieure à 50 W, et comprise de préférence entre 3 et 30 W.

13. Dispositif selon l'une des revendications 1 à 12, **caractérisé en ce que** la fréquence d'excitation ou de service de l'installation (2) destinée à produire le plasma est sélectionnée de sorte à correspondre au moins à 5 KHz, à être comprise de préférence dans l'intervalle allant de 50 KHz à 5 GHz, et à correspondre en particulier à au moins 10 MHz.

14. Dispositif selon l'une des revendications 1 à 13, **caractérisé en ce que** le gaz plasma est sélectionné de manière connue entre l'hélium et l'argon.

15. Dispositif selon l'une des revendications 1 à 14, **caractérisé en ce que** la pression du gaz plasma est sélectionnée de sorte à correspondre au moins à 0,01 bars et à être comprise de préférence entre 0,1 et 5 bars.

16. Dispositif selon l'une des revendications 1 à 15, **caractérisé en ce qu'**un gaz de mélange est ajouté au gaz plasma, dans une quantité représentant au maximum 35% en volume, de préférence au maximum 25% en volume, le gaz de mélange étant composé en particulier de CO₂, de N₂, d'air, de vapeur d'eau, d'hydrogène et d'oxygène.

17. Dispositif selon l'une des revendications 1 à 16, **caractérisé en ce que** plusieurs unités de détection (45, 46, 47, 48) sont juxtaposées et sont soumises au faisceau de rayonnement parallèle.

18. Dispositif selon la revendication 17, **caractérisé en ce que** plusieurs unités de détection (46, 48) sont positionnées à une distance respectivement égale par rapport à une unité de détection à agencement central (45, 47).

19. Dispositif selon la revendication 18, **caractérisé en ce que** l'unité de détection à agencement central (47) a une surface inférieure à celle des autres unités de détection (48).

20. Dispositif selon l'une des revendications 1 à 19, **caractérisé en ce que** la lentille de collimation (3) est constituée par une lentille de collimation asphérique ayant un grand rapport d'ouverture.

21. Dispositif selon l'une des revendications 1 à 20, **caractérisé en ce qu'**une fibre optique (41) est agencée de manière connue entre l'installation (2) destinée à produire le plasma et la au moins une unité de détection (43).

22. Dispositif selon l'une des revendications 1 à 21, **caractérisé en ce qu'**un miroir de déflection ou de déviation (39) est agencé de manière connue entre l'installation (2) destinée à produire le plasma et la au moins une unité de détection (4).

23. Dispositif selon l'une des revendications 1 à 22, **caractérisé en ce qu'**un dispositif de commande destiné à arrêter l'installation (2) destinée à produire le plasma pendant une période prédéterminée en cas de dépassement d'une valeur de seuil du signal de carbone et d'un nouvel amorçage ultérieur est couplé à l'installation (2) destinée à produire le plasma.
